# EUROPEAN PATENT SPECIFICATION

(11) **EP 2 182 228 B1**
(45) Date of publication and mention of the grant of the patent: **16.02.2011**
(21) Application number: 08167906.0
(22) Date of filing: 30.10.2008
(51) Int. Cl.: F16B 45/00

(54) **Eyelet fastening device**
Ösenbefestigungsvorrichtung
Dispositif de fixation d'oeillet

(43) Date of publication of application: 05.05.2010
(73) Proprietor: Stamperia Carcano Giuseppe S.p.A., 22032 Albese con Cassano (IT)
(72) Inventor: Frigerio, Roberto, 22030 Orsenigo (IT)
(74) Representative: Borsano, Corrado

(56) References cited:
- EP-A- 1 961 690
- FR-A- 2 880 084
- GB-A- 793 832
- US-A- 6 017 071

## Description

### FIELD OF THE INVENTION

The present invention relates to a fastening device, of the type comprising a screw for the fixing to an object and a rotating lifting eyelet.

### PRIOR ART

Fastening devices are known for lifting of heavy objects, comprising an eyelet adapted to lash and lift by different kind of means, such as ropes, chains, hoists or other. The eyelet may be secured to the object to be lashed or lifted by means of threaded pins or screws. The eyelet can rotate appropriately about the pin or screw, so as to allow a correct alignment thereof with respect to the direction of the force acting on it by the aforementioned lifting fixing means.

EP 1 961 690 describes a lifting device comprising an element featuring a connection eyelet and a base integral therewith; the base has an opening adapted to accommodate a screw; the screw, in particular an Allen screw is adapted to secure said element to an object to be lifted or fixed. The device further comprises a bushing adapted to be accommodated in said opening and interposed between the screw and the base, the bushing being adapted to be compressed between said screw head and the surface of the object.

The bushing has a flange to be placed under the head of the screw, capable of retaining the base of the element, the opening in the element base being narrower than the flange. Between the base and the bushing a sufficient clearance is foreseen in order to allow the element to rotate about the screw, when the screw is completely tightened into the object. Both the screw and the bushing must be introduced, when assembling the device, into the opening from the side of the connecting eyelet. This and similar devices are rather simple to manufacture; however, due to the fact that the eyelet lies on a plane containing the axis of the opening, the latter is partially hindered by the eyelet itself. The insertion is thus possible up to a certain size of the screw, both with respect to its diameter or its length, unless manufacturing an eyelet of increased size, which may be undesirable, for reasons of bulk, weight and costs.

However, there is often the need to secure an eyelet to an object by a screw with a long stem, either to be directly screwed into the object, or to be fastened by means of a nut at the other extremity of a clearance hole provided in the object. In cases where a clearance hole is provided in the object, solutions have been proposed wherein the screw is inserted in the opening of the base of an eyelet, by the extremity opposite to the head; a specially shaped nut fixes the screw to the eyelet, the object being locked between the head of the screw and the eyelet. However, this solution imposes precise requirements about the length of the screw, which must be sufficient to pass through the object and the base of the eyelet, but not excessive, in order not to interfere with the eyelet. There is the need to provide a nut of special shape and with a flange, which increases the overall costs and complexity. Moreover the screw must be assembled to the eyelet upon fixing thereof to the object, with the possibility that the screw provided or recommended by the manufacturer is replaced with another of unsuited characteristics.

According to alternative solutions, the head of the screw is incorporated into a base of an eyelet. The base is formed by two pieces, connected by means of spheres inserted into a ring cavity formed by two reciprocally facing radial groves, each formed on one of the two pieces, thus implementing a device similar to a ball bearing. The element bearing the eyelet can thus rotate with respect to the other, which is fixed to the object by means of the screw. Different expedients have been developed to allow screwing, e.g. by temporarily locking the reciprocal rotation of the two pieces. Even though this solution overcomes the problems connected with the above devices, its manufacturing is still complex and expensive.

Another example of a similar fastening device provided with a special bushing suitable to incorporate at least a part of the head of the screw once the screw is placed, is disclosed in FR-A-2 880 084, wherein a bushing having a central hole is realized in two parts, one overlapping the other. Thus, the need is felt of a fastening device of the above mentioned kind, suitable to employ a screw of ordinary kind, also large screws, in particular screws with long stems, without that the size or shape of the eyelet is severely affected by the need to insert the screw, and of simple and cost effective manufacturing.

### SUMMARY

The above-identified problems have been solved according to the present invention by a fastening device comprising:
a fastening element which comprises a connection eyelet and a base, integral therewith, having an opening adapted to accommodate a screw;
a screw adapted to secure said element to an object to be lifted or lashed;
a bushing adapted to be accommodated into said opening and to be interposed between said screw and said base, said bushing being adapted to be compressed between the head of the screw and a surface of said object and having a portion, preferably a flange, capable of retaining said base to the object, when the screw is screwed into said object;
characterised in that said opening has dimensions allowing the head of the screw to pass through it and the bushing is composed of at least two separate parts, capable of being inserted into said opening around the stem of the screw when said screw is present in said opening so that said portion is interposed between the head of the screw and the base.

The bushing is dimensioned so that between said portion and said element there is a sufficient clearance to allow the rotation of the fastening element about the bushing also when the screw is completely tightened (this means that the free end of the stem which protrudes from the bushing is completely screwed) into the object or nut. The bushing is preferably cylindrical and its internal diameter is, obviously, such to accommodate the stem of the screw, the external diameter is such to allow a sufficient clearance with the walls of said opening.

The screw, preferably an Allen screw, must be able to be tightened directly into the object, or by means of a nut in a clearance hole, compressing the bushing, with a torque suitable for the intended use of the device, generally such that it prevents the undesired loosening thereof. Therefore, the length of the stem must be sufficient so that the part of the stem protruding from the base of the element and from the bushing, part which is actually screwed into the object, is of sufficient length.

According to a further embodiment, the device comprises means for retaining said screw and bushing in said opening; said means are capable of retaining screw and bushing when the screw is not tightened into an object

It is a particular object of the invention the content of the accompanying claims.

### LIST OF THE FIGURES

The present invention will now be illustrated by means of the detailed description of preferred, but not exclusive, embodiments provided by way of example only, with the aid of the accompanying figures in which:
figure 1 schematically shows a front view of a device according to the present invention;
figure 2 schematically shows a section view of the device according to section plane II-II of figure 1;
figure 3 schematically shows a perspective view of the device showing its components unassembled.

### DETAILED DESCRIPTION OF AN EMBODIMENT

The figures show a device according to the present invention. The device presents a fastening element 5 which comprises connection eyelet 4, adapted to the passage of other means for securing the object, to which the device is adapted to be fixed. Such means may be, for example, chains, ropes, hooks, hoists or the like. Base 3, whose lower surface 6 is intended to face the surface of the object, is integral part, with the eyelet of element 5 the eyelet. Said base presents an opening 7, preferably a cylindrical hole, intended to accommodate stem 9 of a screw 1 and a bushing 2. According to a preferred embodiment, the opening has an axis of symmetry essentially parallel or preferably contained on the plane on which the eyelet lays (plane perpendicular to the eyelet axis). Similar structures are already commonly employed in existing eyelets, because this is a simple and not bulky form of implementation. The screw presents head 8 and threaded stem 9, whose free end, protruding from bushing 2, is intended to be screwed into a corresponding threaded hole in the object, or in a suitable nut, or in a second object placed at the opposite end of a clearance hole provided in the object mentioned above. The bushing has a portion 10, preferably an annular flange. The portion 10 is adapted to retain the base to the object when the screw is tightened into the latter, in particular it has dimensions, for example a diameter, so that, at least when the device is assembled that do not allow it to pass through opening 7, while part of the bushing, in particular the cylindrical part 12 is adapted to be inserted into the opening, preferably with a clearance so as to allow element 5 to rotate. Bushing 2 is adapted to be compressed between the surface of the object and the screw head. Its length is preferably sufficient to allow a suitable clearance between portion 10 at the end of the bushing, base 3 and/or between base 3 and the surface of the object when the screw is fastened with suitable torque into the latter. It is apparent that this clearance, and a suitable clearance further existing between the external side walls of the bushing and the wall of opening 7, imparts to the element the freedom to rotate about the screw axis and with respect to the object, so as to adapt to the load direction. Therefore, opening 7 and the external surface of the part of the bushing adapted to be placed inside the opening are preferably cylindrical.

According to a preferred embodiment of the invention, a seat 11 adapted to accommodate portion 10 is be obtained in base 3. Seat 11 may be, according to a particular embodiment of the invention, a cylindrical cavity coaxial with opening 7, but obviously wider. In such case, surface 13 delimited between the wall of opening 7 and the wall of seat 11, and preferably lying on a plane perpendicular with respect to them, will interfere with portion 10 to withhold element 5 against the object. Seat 11 may also be adapted to contain at least in part the head of the screw, as well as other possible components that will be described below.

According to a preferred embodiment, the screw is an Allen screw, which makes its manoeuvre easier also in case of presence of seat 11. However, screws of other type may be used, for example hexagonal or square headed screws, accessible for example with socket wrenches, if required.

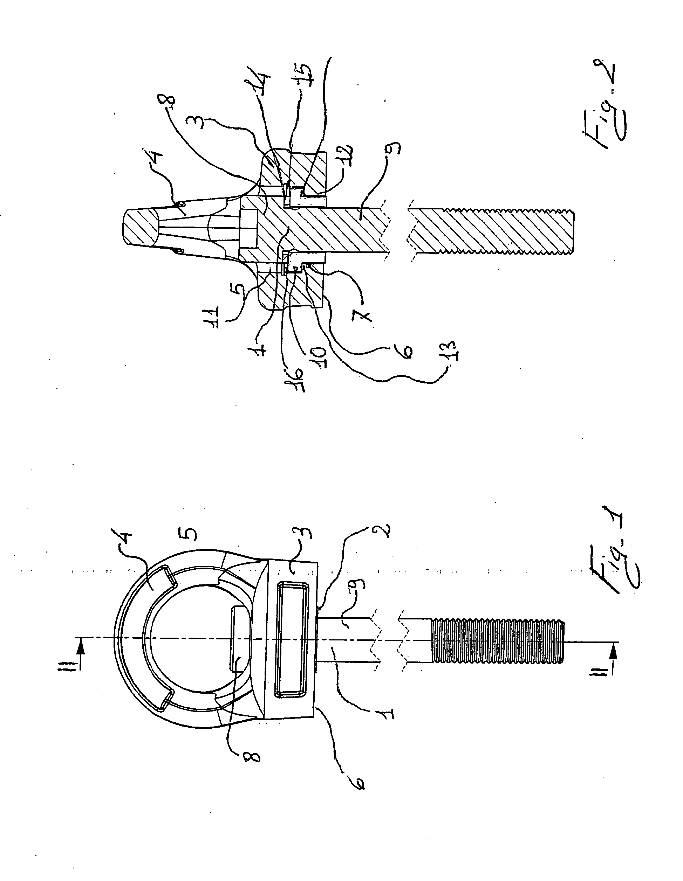

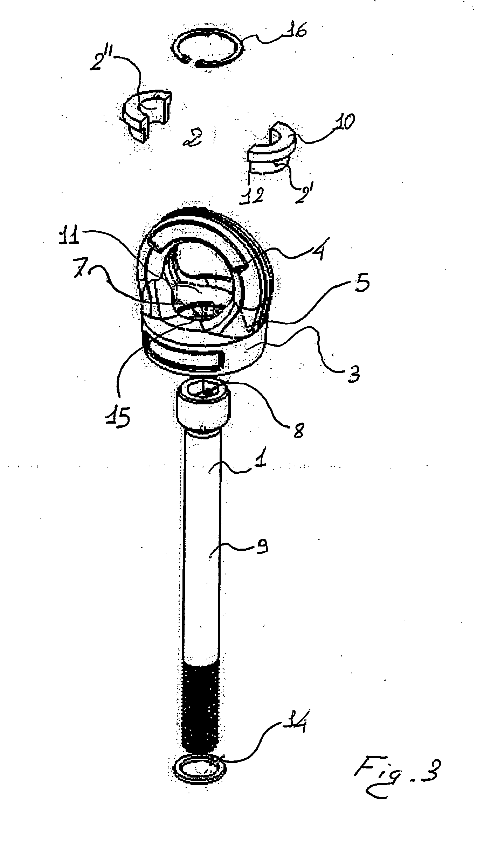

According to the present invention, the bushing is composed of at least two parts, that can be assembled around the stem of the screw after the latter has been inserted into the opening from its head. With particular reference to figure 3, the bushing is formed composed of two separate parts, preferably of two half bushings 2' and 2". Thus, the screw can be inserted into the opening from its head, since the opening has a diameter that allows to do that. The head is inserted so that a part of the stem 9 protrudes from the base, and the two half bushings are placed around the stem and with the cylindrical part 12 into the opening., so that the screw is retained by the bushing and the bushing is retained by portion 10 in the base, as shown in figure 2. Thus there is no need, as with prior art devices to insert the screw from its stem into the opening from the part of the eyelet, which could be impossible for big screws, in particular screws with long stems, unless the eyelet is of dimensions increased according to this requirement, which is not usually desirable. The bushing exemplified is manufactured as a bushing longitudinally split in two parts, which is the simplest form of implementation, however it could be made in different ways, and be composed of unequal parts or more than two parts. The separated parts are preferably completely separated, however they could also be movably connected for example hinged together, as long as they can be assembled directly around the stem of the screw.

According to a preferred embodiment, the device also comprises a washer 14, to be interposed between the bushing and the head of the screw, as shown in figure 2. the washer can be inserted into the screw before inserting it into the opening, as can be derived from figure 3.

There may be contemplated other screwing and unscrewing systems if required, secured to the fastening element, which may be connected to the screw so that the fastening element may rotationally drive it for screwing and unscrewing and which may be disconnected when the free rotation of the fastening element is required. Such systems are described, for example, in EP 0 654 611. However, it may be preferable to use screwing and unscrewing means which are completely separate from the device, to avoid the accidental connection of such means with the screw, when the device is operative, with the risk of accidental unscrewing or blocking of the rotation of the eyelet.

According to a further embodiment, means for preventing disassembling of the device, when the device is not secured to an object, are provided. This prevents the replacement with unsuitable components. Preferably, the seat 11 features with an annular groove 15 in its inner surface, designed to accommodate snap ring 16. as can be seen in figure 2, the snap ring can be inserted, around the stem of the screw, after the bushing has been placed into the opening, so as to prevent its removal. Thus the screw cannot be removed, at least when it is to long to be removed from the side of the eyelet 4, which is the characteristic underlying the present invention. The snap ring is preferably designed so as to not interfere with the head of the screw., and should allow the latter to rotate, as well the base 3 to rotate around the bushing. Thus the components cannot be lost accidentally replaced with components of unsuitable kind which could be dangerous since the device can be designed for heavy loads.

Other forms of implementation are anyway possible; for example, if the head can be completely accommodated in the seat, the snap ring can be thus to retain the head of the screw, or other kind of means can be provided, such protrusions to be clinched similarly to what described also in EP 1 961 690.

The width of base 3 is preferably sufficient so that an external edge of surface 6 may touch the surface of the object and exchange forces therewith, in case of a load applied to eyelet 4, specifically onto its top, in direction parallel to the axis of the eyelet itself (horizontal and laying on the plane of the drawing in figure 2), such as to consequently be able to generate the maximum possible bending force on the screw and/or on the bushing. Thus, the bending load acting on the screw and/or on the bushing may be reduced also in the unfavourable orientation conditions which the eyelet may assume in certain cases, despite its freedom of rotation as described above. A person skilled in the art will know how to dimension the base also according to the clearance left between surface of the object and flange or screw head, so as to allow a suitable contact between edge and surface of the object, with an arm such as to generate an adequate load torque in all cases. This is also considering the high safety coefficients (values even equal to 4) which many standards prescribe for dimensioning, for mechanical stress resistance, of devices of this type.

The device according to the present invention allows the use of screw of commercial type also very long screws. The screw can be of any suitable kind, with a stem completely or partly threaded. Since it is not necessary that the screw can rotate within the bushing, the stem can also be of section different from circular, in the unthreaded portion, as well as the internal section of the bushing., if desired.

## Claims

1. A fastening device comprising:
a fastening element (5) which comprises a connection eyelet (4) and a base (3), integral therewith, having an opening (7) adapted to accommodate a screw;
a screw (1) adapted to secure said element (5) to an object to be lifted or lashed;
a bushing (2) adapted to be accommodated into said opening (7) and to be interposed between said screw (1) and said base (3), said bushing (2) being adapted to be compressed between the head (8) of the screw (1) and a surface of said object and having a portion (10), capable of retaining said base (3) to the object, when
pas de li the screw (1) is screwed into said object;
said opening (7) has dimensions allowing the head (8) of the
pas de li screw (1) to pass through it and the bushing (2) is composed of at least two separate parts (2',2"), **characterised in that** said parts are capable of being put around the stem (9) of the screw (1) when said screw (1) is present in said opening (7) and then capable of being inserted into said opening (7) together with the screw (1), so that said portion (10) is interposed between the head (8) of the screw (1) and the base (3).

2. A device according to claim 1, **characterised in that** said portion is an annular flange (10).

3. A device according to any preceding claim, **characterised in that** the bushing is split into two half-bushings (2', 2").

4. A device according to any preceding claim, **characterised in that** said base comprises a seat (11) adapted to accommodate said portion and, optionally at last part of the head of said screw.

5. A device according to any preceding claim, **characterised in that** said screw is an Allen screw.

6. A device according to any of the preceding claims, **characterised in that** said bushing is dimensioned so as to allow, with the screw being completely tightened into the object, a suitable clearance between said bushing and said base to allow the rotation of said element about said bushing.

7. A device according to any of the preceding claims, **characterised in that** it comprises means (15, 16) adapted to prevent the undesired removal of the bushing and the screw from the opening.

8. A device according to claim 4 and 5, **characterised in that** said means comprise a groove (15), provided in an inner surface of said seat, to accommodate a snap ring, and a snap ring (16) capable of retaining said bushing in said opening.

9. A device according to any preceding claim, **characterised in that** said screw has dimensions so that it cannot be inserted into said opening from the part of said fastening element featuring the eyelet.

## Patentansprüche

1. Befestigungsvorrichtung, welche umfasst:
- ein Befestigungselement (5), welches eine Verbindungsöse (4) und ein damit fest verbundenes Fußteil (3) umfasst und welches eine Öffnung (7) aufweist, die so ausgelegt ist, dass sie eine Schraube aufnimmt;
- eine Schraube (1), die so ausgelegt ist, dass mit ihr das genannte Element (5) an einem Gegenstand befestigt wird, welcher angehoben oder festgezurrt werden soll;
- eine Buchse (2), die so ausgelegt ist, dass sie in die genannte Öffnung (7) eingesetzt und zwischen die genannte Schraube (1) und das genannte Fußteil (3) gebracht werden kann, wobei die genannte Buchse (2) so ausgelegt ist, dass sie zwischen dem Kopf (8) der Schraube (1) und einer Fläche des genannten Gegenstands zusammengedrückt wird, und einen Bereich (10) aufweist, der imstande ist, das genannte Fußteil (3) am Gegenstand zu halten, wenn die Schraube (1) in den genannten Gegenstand geschraubt wird, wobei die genannte Öffnung (7) Abmessungen hat, welche ermöglichen, dass der Kopf (8) der Schraube (1) durch sie hindurch passt, und die Buchse (2) aus mindestens zwei getrennten Teilen (2', 2") besteht,
**dadurch gekennzeichnet, dass** diese Teile dergestalt beschaffen sind, dass sie um den Schaft (9) der Schraube (1) zu liegen kommen, wenn die genannte Schraube (1) sich in der genannten Öffnung (7) befindet, und dass sie dann noch dergestalt beschaffen sind, dass sie in die genannte Öffnung (7) zusammen mit der Schraube (1) eingeführt werden können, so dass der genannte Bereich (10) zwischen dem Kopf (8) der Schraube (1) und dem Fußteil (3) zu liegen kommt.

2. Vorrichtung nach Anspruch 1, **dadurch gekennzeichnet, dass** der genannte Bereich ein Ringflansch (10) ist.

3. Vorrichtung nach irgend einem der vorangehenden Ansprüche, **dadurch gekennzeichnet, dass** die Buchse in zwei Halbbuchsen (2', 2") aufgeteilt ist.

4. Vorrichtung nach irgend einem der vorangehenden Ansprüche, **dadurch gekennzeichnet, dass** das genannte Fußteil einen Sitz (11) umfasst, der so ausgelegt ist, dass er den genannten Bereich aufnimmt, wahlweise am letzten Teil des Kopfes der genannten Schraube.

5. Vorrichtung nach irgend einem der vorangehenden Ansprüche, **dadurch gekennzeichnet, dass** die genannte Schraube eine Innensechskantschraube ist.

6. Vorrichtung nach irgend einem der vorangehenden Ansprüche, **dadurch gekennzeichnet, dass** die genannte Buchse dergestalt bemessen ist, dass sie, wenn die Schraube vollständig in den Gegenstand eingedreht und angezogen ist, einen geeigneten Spalt zwischen der genannten Buchse und dem genannten Fußteil lässt, welcher die Rotation des genannten Elements um die genannte Buchse ermöglicht.

7. Vorrichtung nach irgend einem der vorangehenden Ansprüche, **dadurch gekennzeichnet, dass** sie Mittel (15, 16) umfasst, welche so ausgelegt sind, dass die das unerwünschte Entfernen der Buchse und das Lockern und Ausdrehen der Schraube verhindern.

8. Vorrichtung nach Anspruch 4 und 5, **dadurch gekennzeichnet, dass** die genannten Mittel eine Ringnut (15) umfassen, welche sich in der Innenfläche des genannten Sitzes befindet, um einen Sprengring aufzunehmen, sowie einen Sprengring (16), welcher imstande ist, die genannte Buchse in der genannten Öffnung zu halten.

9. Vorrichtung nach irgend einem der vorangehenden Ansprüche, **dadurch gekennzeichnet, dass** die genannte Schraube solche Abmessungen aufweist, dass sie in die genannte Öffnung nicht von der Seite des genannten Befestigungselements, welches die Öse kennzeichnet, eingesetzt werden kann.

## Revendications

1. Dispositif de fixation comportent :
un élément de fixation (5) qui comporte un oeillet de liaison (4) et une base (3), d'un seul tenant avec celui-ci, ayant une ouverture (7) adaptée pour recevoir une vis,
une vis (1) adaptée pour fixer ledit élément (5) à un objet à lever ou à arrimer,
une bague (2) adaptée pour être reçue dans ladite ouverture (7) et pour être intercalée entre ladite vis (1) et ladite base (3), ladite bague (2) étant adaptée pour être comprimée entre la tête (8) de la vis (1) et une surface dudit objet et ayant une portion (10), pouvant retenir ladite base (3) à l'objet, lorsque la vis (1) est vissée dans ledit objet,
ladite ouverture (7) a des dimensions permettant à la tête (8) de la vis (1) de passer à travers elle et la bague (2) est composée d'au moins deux parties séparées (2', 2"),
**caractérisé en ce que** lesdites parties peuvent être placées autour de la tige (9) de la vis (1) lorsque ladite vis (1) est présente dans ladite ouverture (7) et peut ensuite être insérée dans ladite ouverture (7) en association avec la vis (1), de telle sorte que ladite portion (10) est intercalée entre la tête (8) de la vis (1) et la base (3).

2. Dispositif selon la revendication 1, **caractérisé en ce que** ladite portion est une collerette annulaire (10).

3. Dispositif selon l'une quelconque des revendications précédentes, **caractérisé en ce que** la bague est divisée en deux demies bagues (2', 2").

4. Dispositif selon l'une quelconque des revendications précédentes, **caractérisé en ce que** ladite base comporte une assise (11) adaptée pour recevoir ladite portion et, facultativement, au moins une partie de la tête de ladite vis.

5. Dispositif selon l'une quelconque des revendications précédentes, **caractérisé en ce que** ladite vis est une vis creuse.

6. Dispositif selon l'une quelconque des revendications précédentes, **caractérisé en ce que** ladite bague est dimensionnée de manière à permettre, la vis étant entièrement insérée dans l'objet, un jeu adapté entre ladite bague et ladite base pour permettre la rotation dudit élément autour de ladite bague.

7. Dispositif selon l'une quelconque des revendications précédentes, **caractérisé en ce qu'**il comporte des moyens (15, 16) adaptés pour empêcher le retrait non voulu de la bague et de la vis à partir de l'ouverture.

8. Dispositif selon les revendications 4 et 5, **caractérisé en ce que** lesdits moyens comportent une rainure (15), agencée dans une surface intérieure de ladite assise, pour recevoir un anneau élastique, et un anneau élastique (16) pouvant retenir ladite bague dans ladite ouverture.

9. Dispositif selon l'une quelconque des revendications précédentes, **caractérisé en ce que** ladite vis a des dimensions telles qu'elle ne peut pas être introduite dans ladite ouverture à partir de la partie dudit élément de fixation munie de l'oeillet.
